(19) Europäisches Patentamt
European Patent Office
Office européen des brevets

(11) **EP 0 616 148 B1**

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(51) Int. Cl.⁶: **B30B 1/26**, B21J 9/18, F16C 3/28

(21) Anmeldenummer: **94102699.9**

(22) Anmeldetag: **23.02.1994**

(54) **Hubverstelleinrichtung für einen Exzenterantrieb, insbesondere für eine Exzenterpresse**

Stroke adjusting device for an eccentric drive, especially for an eccentric driven press

Dispositif de réglage de la course d'un entraînement excentrique, notamment pour une presse excentrique

(84) Benannte Vertragsstaaten:
**DE ES IT**

(30) Priorität: **10.03.1993 DE 4307535**

(43) Veröffentlichungstag der Anmeldung:
**21.09.1994 Patentblatt 1994/38**

(73) Patentinhaber: **Maschinenfabrik Müller-Weingarten AG**
**D-88250 Weingarten (DE)**

(72) Erfinder: **Götz, Edwin**
**D-88339 Bad Waldsee (DE)**

(74) Vertreter: **Patentanwälte**
**Eisele, Otten & Roth**
**Seestrasse 42**
**88214 Ravensburg (DE)**

(56) Entgegenhaltungen:
DE-A- 4 129 708          DE-A- 4 219 405
DE-C-  817 685           GB-A- 2 182 750

• SOVIET PATENTS ABSTRACTS Section PQ, Week 9118, 19. Juni 1991 Derwent Publications Ltd., London, GB; AN 91-131500/18 & SU-A-1 572 827 (ABDRAIMOV)
• SOVIET PATENTS ABSTRACTS Section PQ, Week 9021, 4. Juli 1990 Derwent Publications Ltd., London, GB; AN 90-161882/21 & SU-A-1 497 049 (TITOV) 30. Juli 1989

## Beschreibung

Die Erfindung betrifft eine Hubverstelleinrichtung für einen Exzenterantrieb, insbesondere für eine Exzenterpresse nach dem Oberbegriff des Anspruchs 1.

Exzenterantriebe, insbesondere für Exzenterpressen mit gegeneinander verschiebbaren Exzenterbuchsen sind beispielsweise in der DE 35 07 328 C2, der DE-PS 817 685 oder der nicht vorveröffentlichten DE-A-41 29 708 beschrieben. Bei derartigen Exzenterpressen wird der Pressenhub durch eine Welle mit exzentrischer Form verwirklicht. Bei hubverstellbaren Exzenterantrieben wird auf die zentrische Welle oder den exzentrischen Zapfen einer Kurbelwelle zwei bzw. eine Exzenterbuchse montiert. Durch die relative Winkellage von exzentrischen Zapfen und weiterer Exzenterscheiben läßt sich die Exzentrizität des Antriebs und damit der Hub eines Pressenstößels verstellen.

Durch das Verstellen einer Exzenterbuchse auf beispielsweise dem exzentrischen Zapfen einer Kurbelwelle, erhält der Antriebsstößel zwangsläufig eine andere Lage. Dabei tritt mit zunehmender Winkelverstellung zwischen Exzenterzapfen und Exzenterbuchse eine Phasenverschiebung ein, d. h. ein Herausdrehen aus der Symmetrielage des oberen und unteren Totpunktes des Pressenstößels. Durch die Verschiebung des oberen Totpunkts ist deshalb eine Korrektur der elektrischen Schaltwalzen bzw. der Ansteuernocken für die elektrischen Signalgeber der Stößellage und ggf. der zusätzlich von der Antriebswelle angetriebenen Geräte nach der mechanischen Verstellung der Exzenter gegeneinander erforderlich. Dies gilt deshalb, da die Lage der Exzenterwelle selbst bei Veränderung der Lage der Exzenterbuchse unverändert bleibt. Die mit der Exzenterwelle verbundenen elektrischen Steuerwalzen (Schaltwerk) haben demzufolge keine Meldung von der OT-Verschiebung (OT = oberer Totpunkt) erhalten. Ohne eine OT-Korrektur würde die Presse demnach erst nach dem oberen Totpunkt abschalten und so einen unzulässigen Nachlaufwinkel erreichen. Eine nicht exakt definierte Stößellage bedeutet auch eine hohe Unfallgefahr für das Bedienungspersonal vor allem auch bei manuellem Betrieb.

Der Erfindung liegt die Aufgabe zugrunde, eine Exzenterhubverstellung zu schaffen, bei welcher keine Phasenverschiebung zwischen der Stellung der Antriebswelle bzw. des Antriebsrades und der Winkelstellung des Exzenters trotz einer Hubverstellung stattfindet.

Diese Aufgabe wird ausgehend von einer Hubverstelleinrichtung der einleitend bezeichneten Art erfindungsgemäß durch die kennzeichnenden Merkmale des Anspruchs 1 gelöst.

In den Unteransprüchen sind vorteilhafte und zweckmäßige Weiterbildungen der Hubverstelleinrichtung nach Anspruch 1 angegeben.

Der Erfindung liegt der Kerngedanke zugrunde, daß eine Hubverstellung ohne Verschiebung der Phasenlage zwischen Exzenterwelle und Exzenterbuchse dann erzielbar ist, wenn sich der resultierende Gesamtexzenter aus den beiden Exzenterbuchsen nicht gegenüber der Antriebswelle bzw. des Antriebsrades verdreht. Die resultierende Gesamtexzentrizität bei der Verstellung zweier Exzenterbuchsen soll demzufolge eine Richtung einnehmen, die stets in Richtung des Verstellwinkels der Antriebswelle bzw. des Antriebsrades liegt.

Zur Hubverstellung des Exzenterantriebes werden demnach zwei Exzenterbuchsen mit gleicher Exzentrizität über ein Getriebe so gegeneinander verdreht, daß sich der resultierende Gesamtexzenter nicht gegenüber der sich einstellenden Winkelstellung der Antriebswelle bzw. des Antriebsrades verdreht. Hierdurch erübrigt sich eine Korrektur der elektrischen Steuerwalzen und zusätzlich angetriebener Geräte, da keine Verschiebung des oberen Totpunkts aufgrund der Verdrehung der Exzenterbuchsen stattfindet. Eine Korrektur von Ansteuernocken für die elektrischen Signalgeber der Stößellage, z. B. oberer/unterer Totpunkt, ist demnach nicht mehr erforderlich.

Besonders vorteilhaft ist die Durchführung der Verdrehung der Exzenterbuchsen über ein Planetengetriebe. Dabei werden entsprechende innenverzahnte Räder derart verschoben, daß zum einen eine Verriegelung beider Exzenterbuchsen gegeneinander gewährleistet ist, so daß der Kraftfluß direkt auf den Pleuel übertragen werden kann. Umgekehrt wird mittels einer Entriegelung der Exzenterbuchsen eine relative Verstellbarkeit dieser Exzenterbuchsen gegeneinander erzielt. Dabei dienen Endschalter zur genauen Lageerkennung des Antriebssystems. Die Verriegelung der Exzenterbuchsen kann auch hydraulisch mittels kegeliger Buchsen erfolgen.

Weitere Einzelheiten und Vorteile der Erfindung sind in den Zeichnungen dargestellt und in der nachfolgenden Beschreibung von Ausführungsbeispielen näher erläutert. Es zeigen

Fig. 1     einen Exzenterantrieb mit Hubverstelleinrichtung mit gegeneinander verriegelten Exzenterbuchsen,

Fig. 2     den Exzenterantrieb nach Fig. 1 mit entriegelten Exzenterbuchsen zur Verstellung der Exzenterbuchsen gegeneinander,

Fig. 3     eine schematische Darstellung der Exzenterbuchsen in zwei verschiedenen Winkelstellungen und

Fig. 4     eine Ausführungsvariante mit kegelförmigen Exzenterbuchsen und hydraulischer Verriegelung.

Beschreibung von Ausführungsbeispielen:

Allen Ausführungsbeispielen ist es gemeinsam, daß eine Hubverstellung ohne Phasenverschiebung durchgeführt werden kann. Zur Hubverstellung eines Exzenterantriebs 1 werden auf einer drehsymmetrischen Antriebswelle 2 mit Symmetriemittellinie 3 zwei Exzenterbuchsen 4, 5 gleicher Exzentrizität $e_1 = e_2$ über ein Planetengetriebe 6 so gegeneinander verdreht, daß sich trotz Hubverstellung keine Phasenverschiebung zwischen der Winkelstellung der Antriebswelle beim Ausgangspunkt der Hubverstellung und der Winkelstellung der Antriebswelle nach erfolgter Hubverstellung im jeweiligen oberen Totpunkt des Exzenterantriebs ergibt. Dies wird dadurch erreicht, daß der durch die Verdrehung der Exzenterbuchsen 4, 5 resultierende Gesamtexzenter so angeordnet ist, daß er nicht gegenüber der zugehörigen Winkelstellung der Antriebswelle 2 verdreht ist.

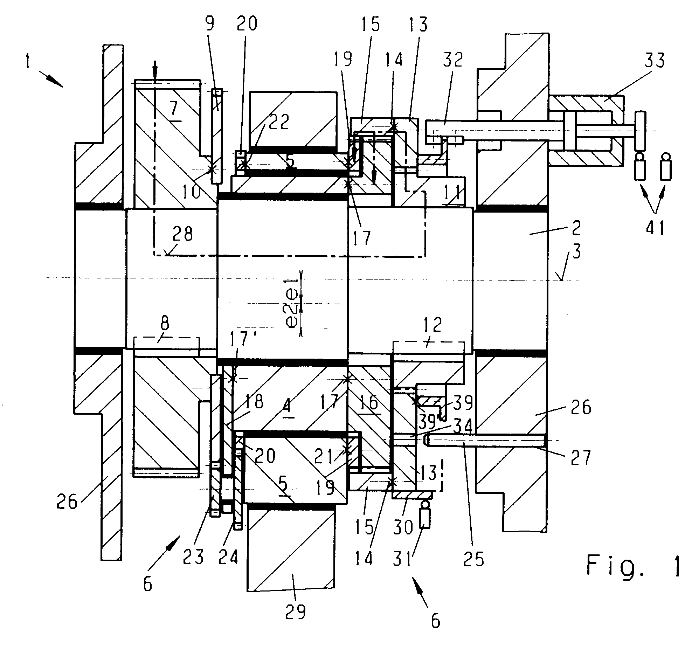

Die Durchführung dieser Verstellung wird nachstehend erläutert. Dabei ist in Fig. 1 die feste Kopplung der beiden Exzenterbuchsen 4, 5 dargestellt, d. h. der Exzenterantrieb nach Fig. 1 ist in Betriebsstellung.

Das Planetengetriebe 6 besteht aus einem Antriebszahnrad 7, welches über eine Paßfeder 8 fest mit der Antriebswelle 2 verbunden ist. Mit dem Antriebszahnrad 7 ist ein weiteres Zahnrad 9 über eine Verbindung 10 fest verbunden. Diese Zahnradanordnung des Planetengetriebes befindet sich auf der in Fig. 1 dargestellten linken Seite der beiden übereinander liegenden Exzenterbuchsen 4, 5.

Rechts von den Exzenterbuchsen 4, 5 befindet sich in Fig. 1 auf der Antriebswelle 2 ein Zahnring 11, der über eine Paßfeder 12 ebenfalls fest mit der Antriebswelle 2 verbunden ist. Auf dem Zahnring 11 läuft ein Innenzahnring 13, der über eine Verbindung 14 mit einem weiteren Innenzahnring 15 fest verbunden ist.

In dem Zahnring 15 läuft ein weiterer Zahnring 16, der über eine Verbindung 17 fest mit der innenliegenden Exzenterbuchse 4 verbunden ist. Gleichermaßen ist auf der anderen Seite der Exzenterbuchse 4 ein Träger 18 über eine Verbindung 17' fest mit der innenliegenden Exzenterbuchse 4 verschraubt.

Ein weiterer Zahnring 19 auf der rechten Seite und ein Zahnring 20 auf der linken Seite der äußeren Exzenterbuchse 5 sind mittels Verbindungen 21, 22 fest mit dieser Exzenterbuchse 5 verschraubt.

Im Träger 18 ist ein Zahnradsatz, bestehend aus Zahnrad 23 und Zahrad 24, fest gelagert. Dieser Zahnradsatz 23, 24 kann auch in mehrfacher Ausführung vorhanden sein.

Ein Arretierbolzen 25 ist fest im Getriebegehäuse 26, schematisch durch eine Bohrungsaufnahme 27 dargestellt, gelagert.

Im Betrieb wird die Antriebsenergie über das Antriebszahnrad 7, die Antriebswelle 2, den Zahnring 11, den Innenzahnring 13, den Innenzahnring 15 auf den Zahnring 16 und Zahnring 19 übertragen, wobei letztere beiden Zahnräder fest mit der inneren Exzenterbuchse 4 bzw. der äußeren Exzenterbuchse 5 verbunden sind. Dieser Kraftfluß ist mit der Kraftflußlinie 28 dargestellt, die sich im Innenzahnring 15 verzweigt und über den Zahnring 16 zur inneren Exzenterbuchse 4 und den Zahnring 19 zur äußeren Exzenterbuchse 5 führt. Damit wird die Antriebsenergie gleichermaßen auf beide Exzenterbuchsen 4, 5 und damit auf den Pleuel 29 übertragen. Bei dieser Konstellation des Planetengetriebes bleibt der Hubverstellmechanismus ohne Krafteinwirkung.

Zur Durchführung der Hubverstellung wird die Maschine bzw. die Exzenterpresse in eine bestimmte Verstellposition gefahren. Den Referenzpunkt bildet beispielsweise ein Nocken 30, der am Innenzahnring 13 befestigt ist und über einen Näherungsschalter 31 abgefragt wird.

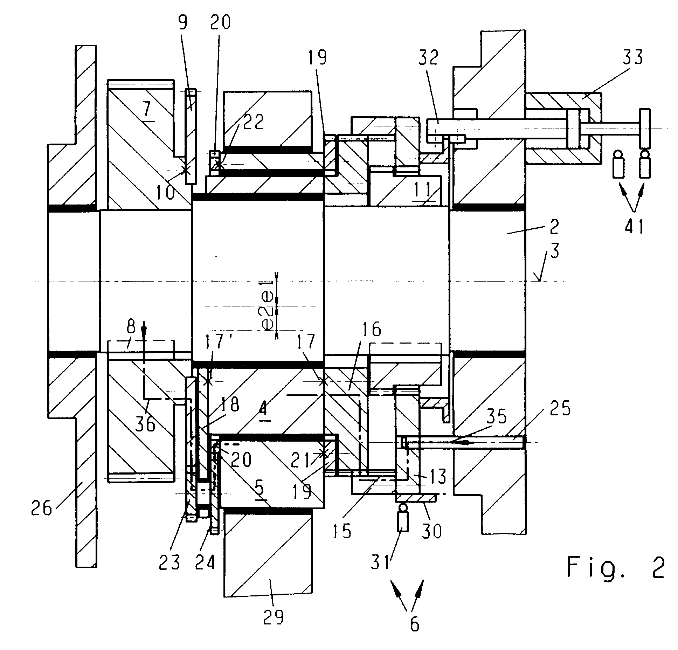

Wie in Fig. 2 näher dargestellt, wird nun die Verbindung zwischen der Antriebswelle 2, der inneren Exzenterbuchse 4 und der äußeren Exzenterbuchse 5 dadurch gelöst, indem der Innenzahnring 13 mit dem hiermit verbundenen Innenzahnring 15 axial über Mitnehmer 32 und Antriebszylinder 33 so weit in der Fig. 2 nach rechts verschoben wird, daß die Innenzahnringe 13, 15 und der Zahnring 19 außer Eingriff kommen. Dabei greift der Arretierbolzen 25 in eine Bohrung 34 im Innenzahnring 13 ein und hält damit über den Innenzahnring 13, den Innenzahnring 15 und den Zahnring 16 nur noch die innenliegende Exzenterbuchse 4 fest. Dieser Kraftfluß ist mit Linie 35 in Fig. 2 angedeutet. Damit ist die innere Exzenterbuchse 4 gegenüber dem Gehäuse 26 in seiner Lage fest fixiert, während die äußere Exzenterbuchse 5 gelöst ist.

Zur Verstellung der Exzenterbuchsen 4, 5 gegeneinander, d. h. zur Hubverstellung, wird die äußere Exzenterbuchse 5 durch die Antriebswelle 2 gehalten. Hierfür dient die Verbindung der Antriebswelle 2 über die Paßfeder 8 zum Antriebszahnrad 7 und von dort aus über das Zahnrad 9, den Zahnradsatz 23, 24 zum Zahnring 20. Dieser Kraftfluß ist mit Linie 36 angedeutet.

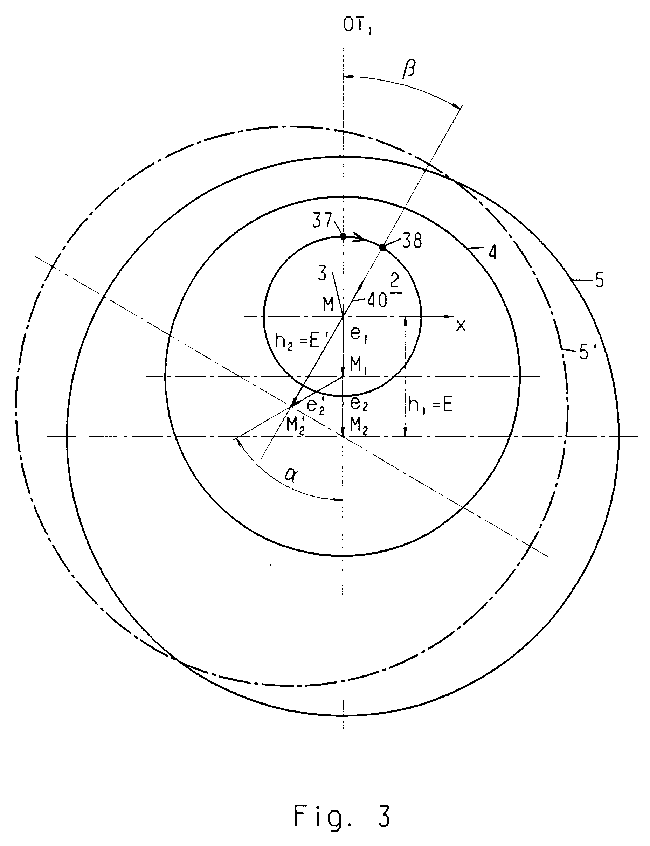

Zur weiteren Erläuterung der Hubverstellung dient auch Fig. 3. Hier befindet sich in der Ausgangsstellung die Exzenterpresse in der maximalen Hubstellung gemäß der Darstellung nach Fig. 2 im unteren Totpunkt (UT). Demzufolge addiert sich der Gesamthub $h_1$ aus der Summe der beiden Exzentrizitäten $e_1 + e_2$ der beiden Exzenterbuchsen 4, 5 mit ihren beiden gleichen Exzentrizitäten $e_1 = e_2$. Der Mittelpunkt M der Antriebswelle 2 liegt demnach um den Betrag $e_1$ oberhalb des Mittelpunkts $M_1$ der inneren Exzenterbuchse 4 und um den Betrag $e_1 + e_2 = h_1$ oberhalb des Mittelpunkts $M_2$ der Exzenterbuchse 5. Der Pleuel 29 führt deshalb den Gesamthub $E = e_1 + e_2 = h_1$ durch.

Diese Ausgangsstellung nach Fig. 3 wird im unteren Totpunkt (UT) beispielsweise durch den Näherungsschalter 31 ermittelt. Um eine Hubgrößenveränderung einzustellen, wird der Antrieb des Antriebsrades 7 betätigt. Die Antriebswelle 2 dreht sich dann beispielsweise um einen Winkel β, d. h. der obere Punkt 37 auf der Antriebswelle 2 wandert zum Punkt 38 um diesen Drehwinkel. Dabei wird die äußere Exzenterbuchse 5 über den im Träger 18 gelagerten Zahnradsatz 23, 24 mittels des Zahnrades 9 und über Zahnrad 20 und die Verbindung 22 mit der entsprechenden Übersetzung in Drehrichtung der Antriebswelle 2 um einen Winkel $\alpha = 2\beta$

voraus angetrieben, bezogen auf die Ausgangslage. Hierbei wandert die äußere Exzenterbuchse 5 in Fig. 3 von der Stellung 5 in die Stellung 5'. Der vektorielle Exzenter $e_2$ wandert in die Stellung $e_2$' und bildet einen neuen Kreismittelpunkt $M_2$' für die Exzenterbuchse 5'. Der nunmehr resultierende Gesamtexzenter E' bildet sich aus der vektoriellen Summe $E' = e_1 + e_2$', wobei dieser Gesamtexzenter E' aufgrund der geometrischen Gegebenheiten immer in der gleichen Richtung (Pfeil 40) liegt, wie der eingestellte Drehwinkel $\beta$ der Antriebswelle 2. Die Verlängerung des Gesamtexzenters E' führt deshalb in Pfeilrichtung zum Endpunkt 38 der vorgenommenen Winkelverschiebung $\beta$. Der neuere obere Totpunkt liegt dann ebenfalls in Pfeilrichtung 40, muß jedoch wieder in die obere Totpunktlage OT verstellt werden, um eine definierte Ausgangslage zu haben. Die maximale Exzentrizität wird demnach durch die Gesamtexzentrizität E' erzielt, wobei es keinerlei Phasenverschiebung zwischen dem eingestellten Winkel $\beta$ zum Zeitpunkt der maximalen Exzentrizität im oberen Totpunkt gibt. Der maximale Hub in dieser Stellung ist mit $h_2 = E'$ bezeichnet und beträgt die Strecke M, $M_2$'.

Dieser Verstellvorgang findet prinzipiell für alle Exzenterverstellungen statt. Durch Festhalten der inneren Exzenterbuchse 4 über den Arretierbolzen 25 bei gleichzeitiger Entkopplung des Zahnringes 11 vom Innenzahnring 13 kann die Antriebswelle 2 um jeden beliebigen Winkel $\beta$ bei stillstehender innerer Exzenterbuchse 4 verdreht werden, wobei sich die Exzentrizität $e_2$ der äußeren Exzenterbuchse 5 stets um den Winkel 2 $\beta$ verdreht. Der Verstellbereich der Antriebswelle zwischen dem maximalen Hub bis zum Null-Hub erfolgt im Bereich des Drehwinkels $\beta$ von Null bis 90°, wobei $\alpha$ von 0 bis 180 wandert. Nach einer Drehung um 360° der Antriebswelle 2 ist die Hubverstellung wieder in ihre Ausgangslage gelangt. Eine Anzeige der Hubgröße sowie der jeweiligen oberen Totpunktabfrage kann über eine Skalenscheibe oder über eine elektrische Positionsauswertung erfolgen, die mit der Antriebswelle 2 verbunden ist. Dabei muß der neue Verstellpunkt (z. B. Punkt 38) durch Verdrehen in die obere Totpunktlage (OT) gefahren werden.

Dreht man den Winkel $\beta$ in Fig. 3 um den Betrag von 90°, so hat sich die Exzentrizität $e_2$' demnach um den Winkel $\alpha = 2 \beta = 180°$ gedreht. In diesem Fall liegt Exzentrizität $e_2$' auf der Exzentrizität $e_1$ auf, so daß sich die beiden Exzentrizitäten aufheben. Die weitere Verstellung der Exzentrizitäten erfolgt dann analog.

Nachdem eine neue Hubgröße mit der Verstellung der Exzentrizität $e_2$' grundsätzlich eingestellt ist, wird über die Antriebszylinder 33 der Innenzahnring 13 über die Mitnehmer 32 mit Mitnehmerring 39 mit Verbindung 39' und damit der Innenzahnring 15 axial nach links verschoben, so daß der Zahnring 11 sowie der Zahnring 16 und der Zahnring 19 wieder miteinander in Eingriff stehen. Diese beiden Stellungen des Innenzahnringes 13 und des Innenzahnringes 15 werden über die Nocken 41 und zugehörige Näherungsschalter überwacht. Sind die Antriebswelle 2, die beiden Exzenterbuchsen 4, 5 sicher miteinander verbunden, so ist die Exzenterpresse wieder betriebsbereit.

Die Erfindung hat durch diese Maßnahmen den Vorteil, daß vom Antriebszahnrad 7 angetriebene Zusatzgeräte, wie z. B. Scheren, Vorschubgeräte, Richtgeräte oder sonstige Mechanisierungen, in ihrer Winkellage zum Gesamtexzenter E nicht mehr nach einer Hubverstellung korrigiert werden müssen. Die elektrische Korrektur der Phasenverschiebung bei Hubverstellungen kann deshalb entfallen. Ein Nockenschaltwerk steht stets richtig zur Antriebswelle, was für die Sicherheitsfunktionen, insbesondere an Einzelhubpressen, wichtig ist.

Der Korrekturmechanismus besteht bei der vorliegenden Erfindung aus einfachen Außenzahnrädern. Die Umlauffähigkeit auch durch den Null-Hub ($E = e_1 - e_2$) ist gegeben. Der Antrieb kann sowohl über das Antriebszahnrad 7 als auch direkt über die Antriebswelle 2 erfolgen. Er ist daher auch geeignet für Einständerpressen mit Schwungradantrieb oder mit Rädervorgelege, für Stanzautomaten mit ein oder mehreren Pleuel in Längs- oder Querwellenausführung mit Schwungradantrieb oder Rädervorgelege.

Eine sichere Synchronisierung bei mehreren Wellen ist durch die genaue Lage des Arretierungsbolzens gegeben. Die Erfindung ist deshalb auch für weitere Antriebe geeignet, die über einen verstellbaren Exzenter angetrieben werden.

Die in den Figuren 1 und 2 dargestellte Ausführungsmöglichkeit für ein Verstellgetriebe mit Antriebskraftübertragung können selbstverständlich auch seitenverkehrt oder aufgeteilt ausgeführt werden.

Es ist auch möglich, den Verstellmechanismus so auszuführen, daß die innere Exzenterbuchse 4 der Antriebswelle 2 nachläuft und die äußere Exzenterbuchse 5 der Antriebswelle voreilt. Eine Ausführung des Verstellmechanismus ist auch mit einem innenverzahnten Planetengetriebe möglich.

Die Hubgrößenabstufung ist abhängig von der Zähnezahl des Zahnringes 11, wobei die Zähnezahl des Zahnringes 16 und des Zahnringes 19 das 1,5- oder 2fache vom Zahnring 11 sein kann, bei gleichem Modul der Zähne. Damit ist der Zahneingriff nach der Hubverstellung gewährleistet.

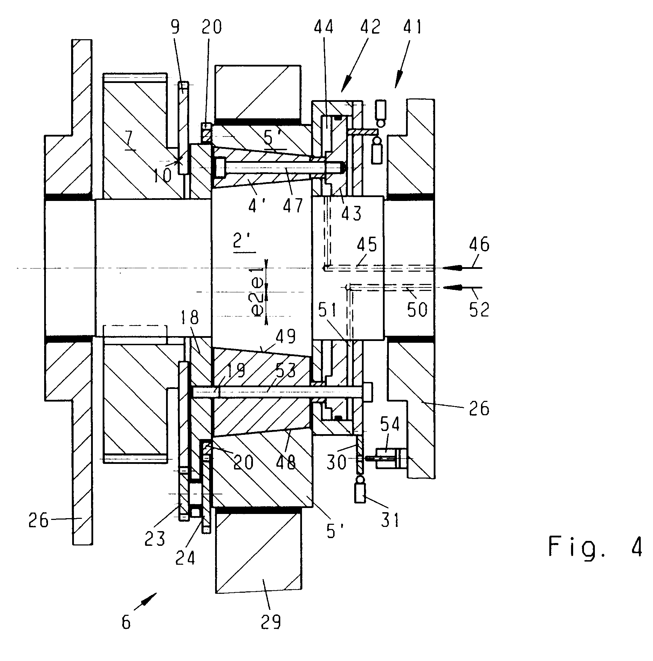

In Fig. 4 ist eine alternative Ausführungsform der Erfindung dargestellt. Hier werden als Exzenterbuchsen 4', 5' kegelförmige Buchsen eingesetzt, deren Kegelflächen gegeneinander verschoben werden. Im übrigen sind gleiche Teile mit gleichen Bezugszeichen wie in Figuren 1 und 2 gekennzeichnet. Insbesondere ist der links der beiden Exzenterbuchsen 4', 5' angeordnete Planetengetriebeteil 6 mit dem Antriebsrad 7, dem Zahnrad 9, dem Zahnradsatz 23, 24, sowie dem Zahnring 20 zur Mitnahme der äußeren Exzenterbuchse 5' gleich ausgebildet.

Die Mitnahme beider Exzenterbuchsen 4', 5' im Betrieb der Maschine erfolgt jedoch beim Ausführungsbeispiel nach Fig. 4 auf kraftschlüssigem Wege. Hierfür wird in einer Kolbenzylindereinheit 42 ein Kolben 43 über einen Ringkanal 44 derart mit einem über eine Leitung 45 zuzuführenden Druckmedium 46 beaufschlagt, daß die innere Exzenterbuchse 4' über einen Zuganker 47 in Fig. 4 nach rechts gezogen wird, so daß sich die beiden Exzenterbuchsen 4', 5' aufgrund ihrer gegenläufigen Konizität (Konusflächen 48) verspannen. Gleichzeitig erfolgt eine Verspannung der inneren Exzenterbuchse 4' mit der ebenfalls konischen Antriebswelle 2' über die Konusflächen 49. Die Verbindung zwischen der Antriebswelle 2' und den beiden Exzenterbuchsen 4', 5' erfolgt demnach rein auf kraftschlüssigem Wege mittels hydraulischer Betätigung über eine Konusverbindung.

Will man die Verbindung zwischen der inneren Exzenterbuchse 4' und der äußeren Exzenterbuchse 5' lösen, so wird über die Leitung 50 der hintere Druckraum 51 der Kolbenzylindereinheit 42 mit Druckmedium 52 beaufschlagt, so daß sich die zugehörigen Kegelflächen durch eine Linksverschiebung der inneren Exzenterbuchse 4' lösen. Um die innere Exzenterbuchse 4' bei der Verstellung der Exzenterbuchsen gegeneinander in ihrer Lage zu fixieren, ist mittels der Fixierstange 53 sowie dem Fixierbolzen 54 eine formschlüssige Verbindung zum Gehäuse 26 gegeben.

Beim Ausführungsbeispiel nach Fig. 4 sind gleichermaßen Positionsnocken oder -scheiben 30 und Näherungsschalter 31 sowie entsprechende Positionsnocken 41 vorgesehen.

| | |
|---|---|
| 1 | Exzenterantrieb |
| 2 | Antriebswelle |
| 3 | Symmetriemittellinie |
| 4 | Exzenterbuchse |
| 5 | Exzenterbuchse |
| 6 | Planetengetriebe |
| 7 | Antriebsrad |
| 8 | Paßfeder |
| 9 | Zahnrad |
| 10 | Verbindung |
| 11 | Zahnring |
| 12 | Paßfeder |
| 13 | Innenzahnring |
| 14 | Verbindung |
| 15 | Innenzahnring |
| 16 | Zahnring |
| 17 | Verbindung |
| 17' | Verbindung |
| 18 | Träger |
| 19 | Zahnring |
| 20 | Zahnring |
| 21 | Verbindung |
| 22 | Verbindung |
| 23 | Zahnradsatz |
| 24 | Zahnradsatz |
| 25 | Arretierbolzen |
| 26 | Getriebegehäuse |
| 27 | Bohrungsaufnahme |
| 28 | Kraftflußlinie |
| 29 | Pleuel |
| 30 | Nocken |
| 31 | Näherungsschalter |
| 32 | Mitnehmer |
| 33 | Antriebszylinder |
| 34 | Bohrung |
| 35 | Kraftfluß |
| 36 | Kraftfluß |
| 37 | Punkt |
| 38 | Punkt |
| 39 | Mitnehmerring |
| 39' | Verbindung |
| 40 | Pfeil |
| 41 | Nocken |
| 42 | Kolbenzylindereinheit |
| 43 | Kolben |
| 44 | Ringkanal |
| 45 | Leitung |
| 46 | Druckmedium |
| 47 | Zuganker |
| 48 | Konusfläche |
| 49 | Konusfläche |
| 50 | Leitung |
| 51 | hinterer Druckraum |
| 52 | Druckmedium |
| 53 | Fixierstange |
| 54 | Fixierbolzen |

**Patentansprüche**

1. Hubverstelleinrichtung für einen Exzenterantrieb, insbesondere für eine Exzenterpresse, wobei durch Verdrehen wenigstens einer, auf einer Welle angeordneten Exzenterbuchse gegenüber einem Antriebsrad bzw. einer Antriebswelle eine Hubverstellung eines Pleuels oder dergleichen erfolgt, dadurch gekennzeichnet, daß zwei Exzenterbuchsen (4, 5) auf einer bezüglich ihrer Mittellinie (3) symmetrischen Welle (2) angeordnet sind, die zur Veränderung ihrer gleichen Exzentrizitäten ($e_1 = e_2$) über ein Getriebe (6) oder dergleichen gegeneinander derart verdrehbar sind, daß sich der resultierende Gesamtexzenter (E) nicht gegenüber der Stellung der Antriebswelle (2) bzw. dem Antriebsrad (7) verdreht, wobei die Exzenterbuchsen (4, 5) gegeneinander lösbar auf der Antriebswelle (2) angeordnet sind und wobei zur Hubverstellung der Exzenterbuchsen wenigstens eine Exzenterbuchse (4) ortsfest gehalten und eine weitere Exzenterbuchse (5) mit der Antriebswelle (2) verdrehbar verbunden ist.

2. Hubverstelleinrichtung nach Anspruch 1, dadurch gekennzeichnet, daß der Antrieb eines Pleuels (29) oder dergleichen mittels der Exzenterbuchsen (4, 5) im Betrieb der Exzenterpresse (1) über eine erste Getriebeanordnung (7, 11, 13, 15, 16, 19) mit verschiebbaren Zahnrädern und Zahnringen erfolgt, wobei die Exzenterbuchsen (4, 5) fest miteinander verbunden sind (Kraftfluß 28).

**3.** Hubverstelleinrichtung nach einem der vorhergehenden Ansprüche, dadurch gekennzeichnet, daß eine Verdrehung der Antriebswelle (2) um einen Winkel $\beta$ eine Verdrehung der mitdrehbaren Exzenterbuchse um $\alpha = 2\beta$ bewirkt, wobei die vektorielle Anordnung der miteinander wirkenden Exzenter $e_1$, $e_2$ zu einem Gesamtexzenter E führt, der stets in Richtung des Drehwinkels $\beta$ der Antriebswelle (2) zeigt.

**4.** Hubverstelleinrichtung nach einem der vorhergehenden Ansprüche, dadurch gekennzeichnet, daß die Verstellbarkeit der Exzenterbuchsen (4, 5) gegeneinander über eine weitere Getriebeanordnung (7, 9, 23, 24, 20) erfolgt (Kraftfluß 36).

**5.** Hubverstelleinrichtung nach Anspruch 1, dadurch gekennzeichnet, daß die Exzenterbuchsen (4', 5') als konische Ringe mit Außenkonusflächen ausgebildet sind, die auf einer zugehörigen Außenkonusfläche (49) der Antriebswelle (2') angeordnet sind und daß eine Verspannung zwischen den Exzenterbuchsen (4', 5') untereinander und der Verspannung gegenüber der Antriebswelle (2') durch eine hydraulische Kolbenzylindereinheit (42) erfolgt.

**Claims**

**1.** Stroke adjusting device for an eccentric drive, in particular for an eccentric press, in which case by rotating at least one eccentric bush located on a shaft, with respect to a drive wheel or a drive shaft, a stroke adjustment of a connecting rod or the like takes place, characterised in that two eccentric bushes (4, 5) are arranged on a shaft (2), which is symmetrical with respect to its centre line (3), which bushes, for varying their identical eccentricities $(e_1 = e_2)$ may be rotated with respect to each other by way of gearing (6) or the like so that the resulting total eccentric (E) does not rotate with respect to the position of the drive shaft (2) or the drive wheel (7), the eccentric bushes (4, 5) being arranged detachably one against the other on the drive shaft (2) and for the stroke adjustment of the eccentric bushes, at least one eccentric bush (4) being held in a stationary manner and a further eccentric bush (5) being rotatably connected to the drive shaft (2).

**2.** Stroke adjusting device according to Claim 1, characterised in that the drive of a connecting rod (29) or the like takes place by means of the eccentric bushes (4, 5) during operation of the eccentric press (1) by way of a first gearing arrangement (7, 11, 13, 15, 16, 19) with displaceable gear wheels and toothed rings, the eccentric bushes (4, 5) being securely connected to each other (flux of force 28).

**3.** Stroke adjusting device according to one of the preceding Claims, characterised in that a rotation of the drive shaft (2) by an angle $\beta$ brings about a rotation of the co-rotary eccentric bush by $\alpha = 2\beta$, the vectorial arrangement of the interactive eccentrics $e_1$, $e_2$ leading to a total eccentric E, which always points in the direction of the angle of rotation $\beta$ of the drive shaft (2).

**4.** Stroke adjusting device according to one of the preceding Claims, characterised in that the adjustability of the eccentric bushes (4, 5) with respect to each other is achieved by way of a further gearing arrangement (7, 9, 23, 24, 20) (flux of force 36).

**5.** Stroke adjusting device according to Claim 1, characterised in that the eccentric bushes (4', 5') are constructed as conical rings with external conical surfaces, which are located on an associated outer conical surface (49) of the drive shaft (2') and that clamping between the eccentric bushes (4', 5') with respect to each other and the clamping with respect to the drive shaft (2') is achieved by a hydraulic piston/cylinder unit (42).

**Revendications**

**1.** Dispositif de réglage de course pour un entraînement d'excentrique, en particulier pour une presse à excentrique, un réglage de la course d'une bielle ou analogue étant réalisé par la rotation d'au moins un coussinet d'excentrique agencé sur un arbre par rapport à une roue d'entraînement ou un arbre d'entraînement,
caractérisé en ce que deux coussinets d'excentrique (4,5) sont agencés sur un arbre (2) symétrique par rapport à leur ligne centrale (3) et peuvent être tournés l'un par rapport à l'autre, pour modifier leur excentricité identique $(e_1 = e_2)$ par l'intermédiaire d'un jeu d'engrenages (6) ou analogue de sorte que l'excentrique global résultant (E) n'est pas décalé par rapport à la position de l'arbre d'entraînement (2) ou de la roue d'entraînement (7), les coussinets d'excentrique (4,5) étant agencés de façon amovible l'un par rapport à l'autre sur l'arbre d'entraînement (2), et au moins un coussinet d'excentrique (4) étant maintenu fixe et un autre coussinet d'excentrique (5) étant relié de façon rotative à l'arbre d'entraînement (2) pour le réglage de la course des coussinets d'excentrique.

**2.** Dispositif de réglage de course selon la revendication 1, caractérisé en ce que l'entraînement d'une bielle (29) ou analogue est réalisé au moyen des coussinets d'excentrique (4,5) dans le fonctionnement de la presse à excentrique (1), par l'intermédiaire d'un premier dispositif à engrenage (7,11,13,15,16,19) comportant différentes roues dentées et couronnes dentées, les coussinets d'excentrique (4,5) étant solidaires l'un de l'autre (liaison de force 28).

3. Dispositif de réglage de course selon l'une des revendications précédentes,
   caractérisé en ce qu'une torsion de l'arbre d'entraînement (2) d'un angle $\beta$ entraîne une torsion du coussinet d'excentrique solidaire en rotation de $\alpha = 2\beta$, la disposition vectorielle des excentriques $e_1$, $e_2$ qui agissent ensemble entraînant un excentrique global E qui est toujours orienté en direction de l'angle de rotation $\beta$ de l'arbre d'entraînement (2).

4. Dispositif de réglage de course selon l'une des revendications précédentes,
   caractérisé en ce que la possibilité de réglage des coussinets d'excentrique (4,5) l'un par rapport à l'autre est réalisée par l'intermédiaire d'un autre dispositif à engrenage (7,9,23,24,20) (liaison de force 36).

5. Dispositif de réglage de course selon la revendication 1,
   caractérisé en ce que les coussinets d'excentrique (4',5') sont réalisés sous forme de couronnes coniques présentant des faces externes coniques, qui sont agencées sur une face externe conique (49) associée de l'arbre d'entraînement (2'), et en ce qu'un gauchissement entre les coussinets d'excentrique (4',5') et un gauchissement par rapport à l'arbre d'entraînement (2') sont obtenus par un vérin hydraulique (42).

Fig. 1

Fig. 2

Fig. 3

Fig. 4